(19) Europäisches Patentamt / European Patent Office / Office européen des brevets

(11) **EP 1 982 065 B1**

(12) **FASCICULE DE BREVET EUROPEEN**

(45) Date de publication et mention de la délivrance du brevet:
**01.06.2011 Bulletin 2011/22**

(21) Numéro de dépôt: **07731518.2**

(22) Date de dépôt: **24.01.2007**

(51) Int Cl.:
**F02D 41/02** (2006.01)

(86) Numéro de dépôt international:
**PCT/FR2007/050690**

(87) Numéro de publication internationale:
**WO 2007/090969 (16.08.2007 Gazette 2007/33)**

(54) **SYSTEME ET PROCEDE D'ELIMINATION DE SOX (OXYDE DE SOUFRE), MODULE D'ARRET POUR CE SYSTEME**

VERFAHREN UND SYSTEM ZUR ENTFERNUNG VON SCHWEFELOXID (SOX) SOWIE STOPPMODUL FÜR DIESES SYSTEM

SULPHUR OXIDE (SOx) REMOVAL METHOD AND SYSTEM AND STOP MODULE FOR SAID SYSTEM

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **09.02.2006 FR 0601161**

(43) Date de publication de la demande:
**22.10.2008 Bulletin 2008/43**

(73) Titulaire: **PEUGEOT CITROËN AUTOMOBILES S.A.**
**78140 Vélizy Villacoublay (FR)**

(72) Inventeurs:
• **FROUVELLE, Benoît**
  **F-75015 Paris (FR)**
• **AUDOUIN, Arnaud**
  **F-75018 Paris (FR)**

(74) Mandataire: **Ménès, Catherine**
**Peugeot Citroën Automobiles SA**
**Propriété Industrielle (LG081)**
**18, rue des Fauvelles**
**92250 La Garenne Colombes (FR)**

(56) Documents cités:
**EP-A1- 1 065 351      EP-A1- 1 479 900**
**EP-A2- 1 030 043      EP-A2- 1 036 926**
**WO-A-01/51779**

EP 1 982 065 B1

**Description**

La présente invention concerne un système et un procédé d'élimination de SOx (Oxyde de Soude), un module d'arrêt pour ce système.

Classiquement, un moteur Diesel de véhicule automobile est associé à des moyens de traitement de ses gaz d'échappement pour réduire la quantité de polluants rejetée dans l'atmosphère et notamment la quantité de molécules d'oxyde d'azote, ou NOx.

A cet effet, le moteur est généralement associé à un piège à NOx agencé dans la ligne d'échappement de celui-ci et adapté pour stocker de telles molécules sous la forme de nitrate sur des sites spécifiques de stockage, tels que du baryum par exemple.

Afin de régénérer le piège à NOx, un dispositif d'alimentation du moteur est basculé en mélange riche afin que le moteur libère dans la ligne d'échappement une quantité suffisante de réducteurs des NOx contenus dans le piège, tels que HC et CO. Les NOx sont alors réduits et désorbés sous la forme de $N_2$ et les sites de stockage libérés pour un nouveau stockage de NOx.

Or, ces sites de stockage sont également aptes à stocker des oxydes de soufre, ou SOx, lorsqu'ils sont exposés à du $SO_2$ généré par le moteur à partir ·r du soufre contenu dans le carburant et l'huile de lubrification du moteur. Le piège se sature ainsi progressivement en SOx, ce qui a pour effet de réduire ses performances catalytiques.

Il est donc nécessaire de purger régulièrement le piège afin d'éliminer les SOx qui y sont stockés. Un example est décrit dans la demande EP110065351.

Or, du fait de la grande stabilité thermodynamique du SOx, le seul basculement en mode riche du moteur ne suffit pas pour réduire ceux-ci. A cette fin, il est également nécessaire d'élever la température du piège jusqu'à des températures élevées supérieures à 650°C.

A cet effet, le piège à NOx est généralement associé à un catalyseur agencé en amont de celui-ci ou intégré sur le même support que le piège. Le catalyseur est adapté pour brûler des hydrocarbures en provenance du moteur et ainsi générer des exothermes pour élever la température du piège.

Il existe donc des systèmes d'élimination de SOx stockés dans un piège à NOx comportant :

- un superviseur d'alimentation apte à exécuter au moins une tâche de purge du piège à NOx, cette tâche consistant à commander un dispositif d'alimentation en carburant pour alimenter le moteur avec un mélange pauvre permettant d'éleyer et de maintenir la température du piège dans une plage rendant possible l'élimination de SOx et, en alternance, avec un mélange riche permettant d'éliminer les SOx stockés dans le piège à NOx,
- un estimateur propre à estimer la vitesse d'élimination des SOx stockés dans le piège à NOx lors de l'exécution de la tâche de purge, et
- un module d'arrêt de la tâche de purge.

Or, si la purge du piège à NOx est nécessaire pour garantir des performances catalytiques minimales pour celui-ci, on sait que de hauts niveaux thermiques endommagent irréversiblement le piège, les matériaux des sites de stockage étant en effet dégradés par de tels niveaux thermiques, ce qui se traduit air final par un vieillissement accéléré du piège.

L'invention vise donc à proposer un système d'élimination de SOx permettant de limiter l'usure du piège à NOx.

L'invention a donc pour objet un système d'élimination de SOx stockés dans un piège à NOx dans lequel le module d'arrêt est apte à commander l'arrêt de la tâche de purge en fonction de la vitesse estimée par l'estimateur.

La Demanderesse a constaté que dans certaines conditions de température ou certaines conditions de circulation du véhicule, la vitesse d'élimination des SOx est faible ce qui conduit à des tâches de purge excessivement longues et donc accélère l'usure du piège à NOx, accroît la consommation énergétique du système et augmente inutilement le taux de dilution du gazole dans l'huile du moteur.

Le système ci-dessus prend en compte la vitesse à laquelle les SOx sont éliminés. Cela permet d'arrêter une tâche de purge qui serait excessivement longue si elle devait être menée jusqu'au bout c'est-à-dire jusqu'à l'élimination de la totalité ou de la majorité des SOx stockés dans le piège à NOx. Ainsi, en rendant possible l'interruption des tâches de purge inefficaces, des phases de chauffage du piège à NOx peuvent être raccourcies ce qui permet de limiter l'usure de ce piège. En effet, une tâche de purge inefficace arrêtée prématurément pourra ensuite être reprise ultérieurement lorsque, par exemple, les conditions de circulation du véhicule seront meilleures et permettront à cette tâche de s'exécuter beaucoup plus rapidement.

Les modes de réalisation de ce système peuvent comporter une ou plusieurs des caractéristiques suivantes :

- un filtre à particules et un superviseur du filtre à particules propre à envoyer une requête de régénération du filtre à particules pour que le superviseur d'alimentation exécute une tâche de régénération du filtre à particules, et le module d'arrêt est également apte à commander l'arrêt de la tâche de purge en fonction de la requête de régénération du filtre à particules envoyé par le superviseur du filtre à particules ;

- le module d'arrêt est apte à comparer la quantité de SOx éliminés obtenue en intégrant la vitesse estimée en fonction du temps écoulé depuis le début de l'exécution de la tâche de purge, à un seuil minimal qui croît en fonction du temps écoulé depuis le début de l'exécution de la tâche de purge, et à commander l'arrêt de la tâche de purge en fonction du résultat de cette comparaison ;
- le module d'arrêt est également apte à commander immédiatement l'arrêt de la tâche de purge dès que la quantité estimée de SOx éliminés est supérieure à un seuil prédéterminé.

Les modes de réalisation de ce système présentent en outre l'avantage suivant :

- commander l'arrêt de la tâche de purge en fonction de la requête de régénération du filtre à particules permet de limiter la consommation en carburant du véhicule en profitant de l'échauffement des gaz d'échappement provoqué par la tâche de purge pour régénérer le filtre à particules.

L'invention a également pour objet un module d'arrêt apte à être mis en oeuvre dans le système ci-dessus d'élimination de SOx.

L'invention a également pour objet un procédé d'élimination de SOx à l'aide du système ci-dessus, dans lequel le module d'arrêt commande l'arrêt de la tâche de purge en fonction de la vitesse estimée par l'estimateur.

Enfin, l'invention a également pour objet un support d'enregistrement d'informations contenant des instructions pour la mise en oeuvre du procédé d'élimination de SOx lorsque ces instructions sont exécutées par un calculateur électronique.

L'invention sera mieux comprise à la lecture de la description qui va suivre, donnée uniquement à titre d'exemple non limitatif et faite en se référant aux dessins sur lesquels :

- la figure 1 est une illustration schématique de l'architecture d'un système d'élimination de SOx stockés dans un piège à NOx d'un véhicule automobile,
- la figure 2 est une illustration schématique d'un organigramme d'un procédé d'élimination de SOx à l'aide du système de la figure 1, et
- la figure 3 est un chronogramme de signaux du système de la figure 1.

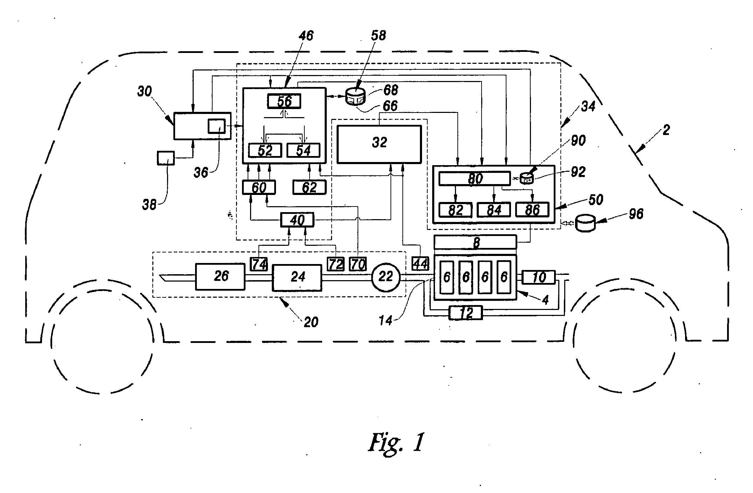

La figure 1 représente un véhicule automobile 2 équipé d'un moteur thermique 4 propre à entraîner en rotation des roues motrices du véhicule Par exemple, le moteur 4 est un moteur diesel.

Dans la suite de cette description, les caractéristiques et fonctions bien connues de l'homme du métier ne sont pas décrites en détail.

Le moteur 4 est équipé de cylindres 6 à l'intérieur desquels se déplacent des pistons propres à entraîner en rotation un arbre à came.

Le moteur 4 est associé à un dispositif 8 commandable d'alimentation en carburant des cylindres 6.

Le moteur 4 est également associé à un dispositif 10 d'admission d'un mélange air/gaz d'échappement dans les cylindres 6. Ce mélange est obtenu en mélangeant de l'air frais aux gaz d'échappement produits par le moteur 4. A cet effet, le dispositif 10 est fluidiquement raccordé à un dispositif 12 de recirculation des gaz d'échappement plus connu sous le terme de dispositif EGR (Exaust Gaz Recirculation). Ce dispositif 12 est fluidiquement raccordé à une sortie 14 des gaz d'échappement. La sortie 14 est également fluidiquement raccordée à une ligne d'échappement 20 permettant d'expulser les gaz d'échappement en dehors du véhicule 2.

Cette ligne d'échappement 20 est successivement équipée en allant de l'amont vers l'aval d'un turbocompresseur 22, d'un piège à NOx 24 et d'un filtre à particules 26.

Ici, le piège à NOx 24 réalise également la fonction de catalyseur d'excitation par l'intégration sur son support de moyens formant catalyseur. Ce catalyseur est apte à générer des exothermes pour élever la température du piège.

Le véhicule 2 est également équipé d'un superviseur 30 du filtre à particules 26, d'un superviseur 32 de la régénération du piège 24 et d'un système 34 d'élimination des SOx stockés dans le piège 24.

Le superviseur 30 est propre à générer une requête de régénération destinée à déclencher une tâche de régénération du filtre à particules 26. Dans ce mode de réalisation, ce superviseur 30 comprend également un estimateur 36 de types de roulage du véhicule 2. Ici, par exemple, le type de roulage peut prendre trois valeurs différentes, à savoir la valeur « URBAIN », « ROUTE » et « AUTOROUTE ». La valeur « URBAIN » indique que les conditions de routage du véhicule 2 s'apparentent aux conditions de roulage d'un véhicule en ville. La valeur « ROUTE » indique que les conditions de roulage du véhicule 2 s'apparentent à celles qui sont rencontrées sur une route nationale. Enfin, la valeur « AUTOROUTE » indique que les conditions de roulage du véhicule 2 sont celles qui se rencontrent sur un autoroute. L'estimateur 36 établit le type de roulage à partir de différents capteurs des conditions de fonctionnement du véhicule 2 dont notamment un capteur 38 de la vitesse du véhicule 2.

Ici, les valeurs « URBAIN », « ROUTE » et « AUTOROUTE » sont associées respectivement à trois valeurs numériques classées dans l'ordre croissant de manière à ce qu'un type de roulage particulier puisse être discriminé par comparaison à un seuil prédéterminé.

Le superviseur 32 est apte à générer et à envoyer une requête de régénération du piège 24 lorsqu'il est nécessaire d'éliminer les NOx stockés dans le piège 24. L'envoi de cette requête est, par exemple, déclenché en fonction :

- d'une estimation de la température TNOx à l'intérieur du piège 24 délivrée par un estimateur 40, et
- d'une mesure représentative de la température de fonctionnement du moteur 4. Cette mesure est, par exemple, délivrée par un capteur 44 de la température de l'eau de refroidissement du moteur 4.

Le système 34 comprend un superviseur 46 de la purge du piège 24 ainsi qu'un superviseur d'alimentation 50 propre à commander le dispositif 8.

Le superviseur 46 comprend :

- un générateur 52 de requêtes de purge du piège 24,
- un module 54 d'arrêt de la purge du piège 24, et
- une minuterie 56 propre à décompter un intervalle de temps prédéterminé à partir du moment où elle est déclenchée.

Le superviseur 46 est également raccordé à des moyens de stockage d'informations telle qu'une mémoire 58, à un estimateur 60 de l'empoisonnement du piège 24 en SOx, à un estimateur 62 du taux de dilution de l'huile de lubrification du moteur 4, et au capteur 44.

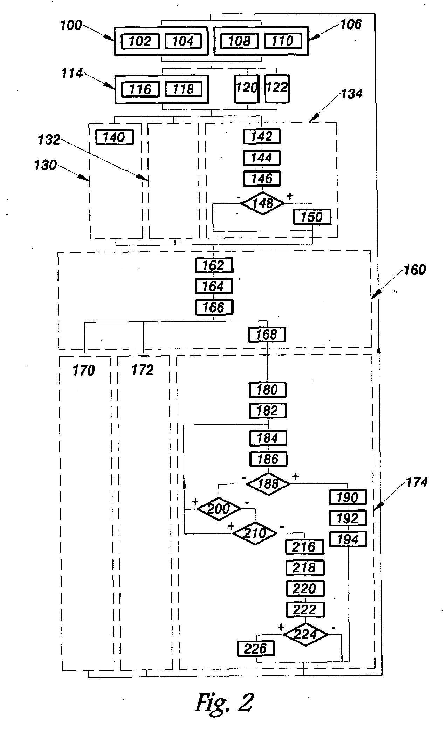

La mémoire 58 est destinée à stocker différentes variables utilisées lors de l'exécution du procédé de la figure 2. En particulier, la mémoire 58 comprend :

- une variable « tempo deSOx inachevé » qui prend la valeur vraie tant que la minuterie 56 n'a pas fini de décompter l'intervalle de temps prédéterminé,
- une variable « compteur deSOx successivement échouée » qui contient le nombre de tâches de purge successivement lancées et inachevées,
- une variable « condition deSOx critique » qui prend la valeur vraie pour indiquer que les conditions de fonctionnement du piège 24 actuelles permettent difficilement de mener à bien une tâche de purge et qui prend la valeur faux sinon, et
- la variable « deSOx défavorable » qui prend la valeur vraie lorsque la tâche de purge du piège 24 en cours d'exécution est inefficace, et la valeur faux sinon.

La variable « deSOx défavorable » correspond à un degré d'efficacité à deux états possibles de la tâche de purge.

La mémoire 58 comprend également une base de règles 66 utilisée par le générateur 52 pour générer la requête de purge, et une base de règles 68 utilisée par le module 54 pour commander l'arrêt de la purge.

Ces bases de règles 66 et 68 sont détaillées plus loin.

L'estimateur 60 est apte à émettre un indicateur du niveau d'empoisonnement en SOx du piège 24. Ici, cet indicateur prend cinq valeurs différentes respectivement « FAIBLE », « MOYEN », « ELEVE », « TRES ELEVE » et « CRITIQUE ».

L'estimateur 60 est également apte à émettre une vitesse instantanée VdeSOx d'élimination des SOx du piège 24 lors de l'exécution de la tâche de purge, et une estimation de la masse mSOx de SOx actuellement stockés dans le piège 24. La valeur de cet indicateur et de ces différentes estimations sont, par exemple, établies à partir de l'estimation TNOx de la température à l'intérieur du piège 24 et des informations délivrées par une sonde λ proportionnelle 70 propre à mesurer la richesse du mélange entrant dans le piège 24.

Plus précisément, l'estimateur 60 calcule en continu la masse de SOx stockée dans le piège 26. Par exemple, a cet effet, deux calculs différents sont effectués. En effet, l'un de ces calculs concerne la vitesse de stockage du SOx et l'autre la vitesse VdeSOx de déstockage de celui-ci. Selon qu'une tâche de purge est en cours ou non, un commutateur vient intégrer l'une ou l'autre des vitesses pour estimer en continu la masse mSOx de soufre dans le piège.

Le calcul de la vitesse de stockage du SOx est en fait la somme de deux vitesses de stockage, à savoir celle due au soufre contenu dans le carburant consommé par le moteur et celle due au soufre contenu dans l'huile de lubrification consommée par le moteur.

La vitesse de stockage du SOx issu du carburant consommé par le moteur est calculée en supposant la teneur en soufre du carburant constante, à savoir par exemple 10 ppm. La consommation instantanée du moteur en carburant (Qcarb) est déterminée en réalisant la somme des débits des différentes injections utilisées, à savoir les injections pilotes ($Qpilot_i$), principales ($Qmain_i$) et post-injections ($Qpost_i$) selon la relation :

$$Qcarb(g/s) = (0{,}835/3.10^4)^*(Qpilot_i+Qmain_i+Qpost_i(mm3/cp))^*N_i(tr/min)$$

dans laquelle N représente le régime de rotation du moteur.

Cette consommation instantanée est ensuite multipliée par la teneur en soufre du carburant, ce qui donne la vitesse de stockage issue de celui-ci.

La vitesse de stockage du soufre issu de l'huile consommée par le moteur est calculée à partir de la consommation d'huile par le moteur, ce qui est une valeur calibrable par exemple en g/1000 km parcouru, multipliée par la teneur de l'huile en soufre qui est également une valeur calibrable.

Cette vitesse de stockage est alors déterminée selon la relation :

$$(\text{Teneur en soufre de l'huile [ppm]})^*(\text{Consommation huile [g/1000km]}/1000)^*(\text{Vitesse du véhicule [km/h]}/3600).$$

La vitesse de stockage totale du soufre est donc la somme de celle issue du carburant et de celle issue de l'huile de lubrification.

La vitesse de déstockage VdeSOx est quant à elle calculée lorsqu'une tâche de purge est exécutée. La masse mSOx de SOx dans le piège 24 diminue à chaque passage en mode de fonctionnement du moteur alimenté en mélange riche. On utilise alors un modèle prédéterminé de déstockage pour représenter l'évolution de la masse mSOx durant la tâche de purge. Ce modèle est apte à délivrer une estimation de la vitesse VdeSOx (g/s) en fonction de la valeur de la richesse des gaz telle que délivrée par la sonde lambda proportionnelle 70 et de la température à l'intérieur du piège 26 estimée par l'estimateur 40.

Ensuite la masse mSOx est comparée à différents seuils, par exemple prédéterminés, pour estimer un niveau d'empoisonnement des moyens de dépollution.

Ainsi, par exemple, cette masse peut être comparée à quatre seuils prédéterminés pour définir cinq niveaux d'empoisonnement, à savoir un niveau d'empoisonnement faible, un niveau moyen, un niveau élevé, un niveau très élevé et un niveau critique, le niveau correspondant étant transmis au superviseur 46 et intervenant dans la décision de lancer et d'arrêter une tâche de purge.

L'estimateur 62 estime la valeur de dilution de l'huile à partir de cartographies de dilution d'huile par le carburant et d'évaporation de celui-ci au cours du fonctionnement du moteur dans ses différents modes et à partir de la durée de fonctionnement de ce moteur selon chaque mode.

Par exemple, pour cela on utilise un module d'estimation de dilution horaire d'huile et un module d'estimation d'évaporation horaire d'huile.

Ces modules qui se présentent par exemple sous la forme de cartographies de dilution et d'évaporation pré-établies lors de la mise au point du moteur et des moyens de dépollution associés, qui reçoivent en entrée différentes informations relatives aux conditions de fonctionnement du moteur, telles que par exemple des informations de régime de rotation du moteur, de débit de carburant et de mode de fonctionnement du moteur.

Le module d'évaporation reçoit également en entrée une information de température de l'huile et de taux de dilution globale de celle-ci.

Ainsi, la cartographie de dilution est établie à partir du régime, du débit et du mode de fonctionnement du moteur tandis que la cartographie d'évaporation est établie à partir du régime, du débit, du mode de fonctionnement, de la température d'huile et du taux de dilution globale.

En fonction des différents paramètres listés ci-dessus, il est donc possible de connaître la valeur de la dilution et de l'évaporation horaire de l'huile, qui sont cartographiées.

Ainsi, en fonction du temps passé sur chaque point de fonctionnement prédéterminé du moteur, on peut en déduire une valeur de dilution accumulée D-acc sur un historique de roulage du véhicule.

De même, en fonction du temps passé par le moteur sur chaque point de fonctionnement, on peut déduire une valeur d'évaporation accumulée E-acc sur l'historique de roulage du véhicule.

Ceci se fait par l'intermédiaire d'accumulateurs correspondants qui cumulent les valeurs de dilution et d'évaporation dans le temps, la dilution globale D-globale pouvant être déduite de la différence entre la dilution accumulée D-acc et l'évaporation accumulée E-acc.

Les valeurs obtenues de dilutions globales D-globale sont alors comparées à des seuils prédéterminés afin d'affecter au taux de dilution, par exemple, quatre valeurs différentes, à savoir « faible », « moyen », « élevé » et « critique ».

A titre d'illustration, l'estimateur 40 établit l'estimation TNOx à l'aide de deux capteurs 72 et 74 de la température des gaz d'échappement respectivement en amont et en aval du piège 24.

La base 66 comprend des règles qui permettent d'établir la valeur d'un degré d'urgence affecté à la tâche de purge du piège 24 en fonction des estimations réalisées par les estimateurs 36, 60, 62 et de la température mesurée par le capteur 44. Dans ce mode de réalisation, les règles de la base 66 sont, par exemple, les suivantes :

Règle 0 :

La valeur du degré d'urgence est égale à « 0 », lorsque aucune des règles suivantes ne s'applique. Dans ce cas, il n'est pas nécessaire de planifier l'exécution d'une tâche de purge et aucune requête de purge n'est transmise au superviseur 50.

Règle 1 :

La valeur du degré d'urgence est égal à « 1 » lorsque :

- (le taux de dilution est égal à « faible » ou « moyen » ou « élevé »)
  ET
- (la température mesurée par le capteur 44 est supérieure à un seuil prédéterminé)
  ET
- (la variable « tempo deSOx inachevé » est égale à faux et la variable « condition deSOx critique » est égale à faux)
  ET
- (le niveau d'empoisonnement est égal à « moyen » ou « élevé ») ou (le niveau d'empoisonnement est égal à « très élevé » et le type de roulage est inférieur à un seuil prédéterminé)

Lorsque le degré d'urgence est égal à « 1 », cela signifie que le niveau d'empoisonnement en souffre commence à être significatif sans que toutefois le besoin soit réellement urgent. Il englobe également le cas de figure où le niveau d'empoisonnement est égal à « très élevé » mais où les conditions de roulage ne sont pas favorables à l'exécution d'une tâche de purge. Dans ce dernier cas, la valeur du degré d'urgence est maintenue égale à « 1 » afin de ne pas brusquer le déclenchement de cette tâche de purge.

Règle 2 :

Le degré d'urgence est égal à « 2 » si :

- (le taux de dilution est égal à « faible » ou « moyen » ou « élevé »)
  ET
- (la température mesurée par le capteur 44 est supérieure à un seuil prédéterminé)
  ET
- (la variable « condition deSOx critique » est égale à faux)
  ET
- (le niveau d'empoisonnement est égal à « très élevé » et le type de roulage est supérieur à un seuil prédéterminé)

Lorsque le degré d'urgence est égal à « 2 » cela signifie que le piège 24 présente un niveau d'empoisonnement fort et que les conditions de roulage du véhicule 2 sont favorables à l'exécution d'une tâche de purge. La nécessité d'exécuter cette tâche de purge est donc justifiée sans toutefois être vitale ni extrêmement urgente. En particulier, il peut être remarqué qu'il n'y a plus de condition sur la variable « tempo deSOx inachevé » dans la règle 2. En effet, l'identification de conditions de roulage favorables laisse espérer que la tâche de purge peut être réussie même si elle a précédemment échouée.

Règle 3 :

Le degré d'urgence est égal, à « 3 » si :

- (le niveau de dilution est égal à « faible » ou « moyen » ou « élevé »)
  ET

- (la température mesurée par le capteur 44 est supérieure à un seuil prédéterminé)
  ET

- (la variable « condition deSOx critique » est égale à faux)
  ET

- (le niveau d'empoisonnement est égal à « critique »).

Lorsque le degré d'urgence est égal à « 3 », le piège présente un niveau d'empoisonnement critique. Il est donc capital pour sa durabilité et pour éviter des détériorations irréversibles de demander l'exécution d'une tâche de purge de façon urgente.

Règle 4 :

Le degré d'urgence est égal à « 4 » si :

- (le niveau de dilution est égal à « faible » ou « moyen » ou « élevé »)
  ET

- (la température mesurée par le capteur 44 est supérieure à un seuil prédéterminé)
  ET

- (la variable « condition de SOx critique » est égale à vraie)
  ET

- (le type de roulage est supérieur à un seuil prédéterminé).

Le degré d'urgence est égal à « 4 » lorsque le superviseur 46 a détecté un certain nombre d'exécutions échouées de la tâche de purge (la variable « condition deSOx critique » est passée de la valeur faux à la valeur vraie). Cela signifie que le superviseur 46 éprouve des difficultés importantes à exécuter de façon efficace la tâche de purge. En conséquence, il devient prioritaire de guetter la moindre condition favorable afin d'essayer de réussir cette tâche de purge. Le degré d'urgence prend donc la valeur « 4 » dès que les conditions de roulage sont favorables et ce quel que soit la quantité de SOx dans le piège 24. L'échec des précédentes tâches de purge signifie que les conditions de roulage sont très rarement favorables et il est donc judicieux que le degré d'urgence prenne la valeur « 4 » afin de profiter du moment où les conditions de roulage deviendront enfin favorables.
On remarquera que le degré d'urgence prend systématiquement la valeur « 0 » lorsque :

- le moteur est froid (ce qui correspond à une température mesurée par le capteur 44 inférieure au seuil prédéterminé). En effet, dans de telles conditions, la tâche de purge ne peut pas être menée à bien jusqu'au bout.
- le taux de dilution est égal à « critique ». En effet, ici, la tenue du moteur est privilégiée sur la durabilité et la détérioration du piège 24.

La base 68 comprend des règles permettant de déterminer si une commande d'arrêt de la tâche de purge doit être émise. Par exemple, la base 68 comprend les règles suivantes :

Règle 5 :

Si la masse mSOx estimée par l'estimateur 60 atteint la valeur zéro, alors la tâche de purge doit être arrêtée.

7

Règle 6 :

Si la vitesse VdeSOx estimée par l'estimateur 60 devient inférieure à un seuil prédéterminé, alors, affecter la valeur vraie à la variable « condition deSOx défavorable » sauf si au même instant une tâche de régénération du filtre 26 doit être exécutée.

Dans ce mode de réalisation, plutôt que de comparer la vitesse VdeSOx à un seuil prédéterminé, cette vitesse VdeSOx est intégrée depuis le début de l'exécution de la tâche de purge afin d'obtenir une masse mdeSOx éliminée depuis le début de l'exécution de la tâche de purge et cette masse mdeSOx est comparée à un seuil prédéterminé dont la valeur augmente en fonction du temps écoulé depuis le début de l'exécution de la tâche de purge.

De plus, le superviseur 46 est raccordé au superviseur 30 pour recevoir l'information selon laquelle une tâche de régénération du filtre 26 doit être exécutée.

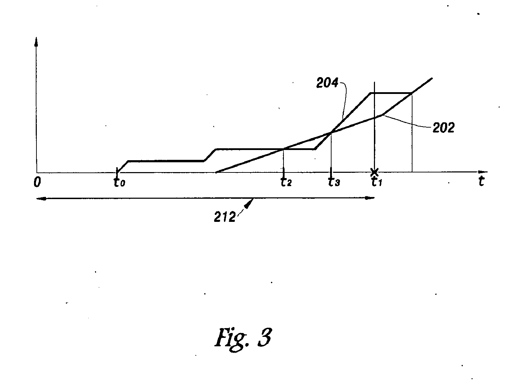

Un exemple plus précis d'utilisation de la règle 6 sera donné en regard de la figure 3.

Les superviseurs 30, 32 et 46 sont raccordés au superviseur 50 de manière à ce que celui-ci puisse recevoir les requêtes de régénération du piège 24 et du filtre 26 ainsi que les requêtes de purge et les commandes d'arrêt de l'exécution de la tâche de purge. Le superviseur 50 est également apte à informer le superviseur 30 qu'une tâche de purge a été effectuée.

Le superviseur 50 comprend un module de décision commun 80 recevant les requêtes de régénération et de purge et propre à planifier en fonction de ces requêtes les instants auxquels peuvent être exécutées les tâches de régénération et de purge. Ce module 80 est apte à activer un contrôleur 82 de régénération du filtre 26, un contrôleur 84 de purge du piège 24 et un contrôleur 86 de régénération du piège 24. Les contrôleurs 82 et 86 sont aptes à commander le dispositif d'alimentation 8 selon une stratégie prédéterminée afin de déclencher et d'exécuter une tâche de régénération respectivement du filtre 26 et du piège 24. Par exemple, la tâche de régénération du piège 24 peut être exécutée conformément à l'enseignement du brevet EP 0859132.

Le contrôleur 84 est apte à commander le dispositif 8 pour exécuter la tâche de purge du piège 24. Cette tâche de purge est, par exemple, exécutée conformément à l'enseignement de la demande de brevet FR 04 07884 déposée le 15 juillet 2004 au nom de PEUGEOT CITROEN AUTOMOBILES SA.

Le module de décision commun 80 est également associé à des moyens de stockage d'informations telle qu'une mémoire 90 contenant une base de règles 92.

La base 92 contient des règles permettant d'ordonnancer et de planifier l'exécution des tâches de régénération et de purge.

Par exemple, les règles permettant d'ordonnancer et de planifier l'exécution des tâches de régénération du filtre 26 et de purge du piège 24 sont les suivantes :

Règle 7 :

Lorsque aucune requête de régénération ou de purge n'est reçue par le superviseur 50, alors aucune tâche de régénération du filtre 26 ou de purge du piège 24 n'est exécutée.

Règle 8 :

Lorsque une requête de régénération du filtre 26 est reçue et qu'aucune requête de purge n'est reçue, alors exécuter une tâche de régénération du filtre 26 et ne pas exécuter une tâche de purge du piège 24.

La règle 8 permet de lancer l'exécution d'une tâche de régénération du filtre 26 uniquement si aucune tâche de purge du piège 24 ne doit être exécutée.

Règle 9 a:

Si seule une requête de purge contenant un degré d'urgence égal à « 1 » a été reçu, alors retarder le déclenchement de la tâche de purge du piège 24.

En d'autres termes, si le degré d'urgence affecté à la tâche de purge n'est pas très élevé, on sursoit à l'exécution de cette tâche.

Règle 9 b :

Si une requête de purge du filtre 26 est reçue et qu'il a été sursit à l'exécution de la tâche de purge, alors exécuter uniquement la tâche de purge et annuler l'exécution de la tâche de régénération correspondant à la requête de régénération reçue.

En effet, à cause de l'élévation de la température des gaz d'échappement provoquée par la tâche de purge, cette tâche provoque également simultanément la régénération du filtre 26. Cette règle 9b permet donc d'éviter qu'une tâche de régénération du filtre 26 soit exécutée immédiatement avant ou immédiatement après une tâche de purge. Ceci limite la consommation en carburant ainsi que l'usure du filtre 26.

Règle 10 :

Si la requête de purge reçue comporte un degré d'urgence égal à « 2 », « 3 » ou « 4 », alors exécuter immédiatement uniquement une tâche de purge.

En effet, le fait que le degré d'urgence soit égal à « 2 », « 3 » ou « 4 » signifie qu'il est urgent de purger le piège 24 sans attendre pour cela qu'une requête en régénération du filtre 26 soit reçue.

A titre d'exemple, le système 34 d'élimination de SOx est réalisé à partir d'un calculateur électronique programmable apte à exécuter des instructions enregistrées sur un support d'enregistrement d'informations 96. A cet effet, le support d'enregistrement 96 comporte des instructions pour l'exécution du procédé de la figure 2 lorsque ces instructions sont exécutées par le calculateur électronique.

Le fonctionnement du système 34 va maintenant être décrit plus en détail en regard du procédé de la figure 2.

Initialement, lors d'une étape 100, les conditions de fonctionnement du moteur 4 sont mesurées. Par exemple, lors de cette étape 100, la température de l'eau de refroidissement du moteur 4 est mesurée, lors d'une opération 102, par le capteur 44 et la vitesse du véhicule 2 est mesurée, lors d'une opération 104, par le capteur 38.

En parallèle, lors d'une étape 106, les conditions de fonctionnement de la ligne d'échappement 20 sont également mesurées. Par exemple, lors de l'étape 106, les températures en amont et en aval du piège 24 sont mesurées, lors d'une opération 108, par les capteurs 72 et 74 et la richesse du mélange gazeux en amont du piège 24 est mesurée, lors d'une opération 110, par la sonde 70.

Ensuite, a partir des différentes mesures réalisées, les conditions de fonctionnement du piège 24 sont estimées, lors d'une étape 114. Par exemple, lors de l'étape 114, la température TNOx à l'intérieur du piège 24 est estimée, lors d'une opération 116, par l'estimateur 40. C'est également lors de cette étape 114 que l'estimateur 60 estime, lors d'une opération 118, le niveau d'empoisonnement du piège 24, la vitesse VdeSOx et la masse mSOx.

En parallèle de l'étape 114, lors d'étapes 120 et 122, le taux de dilution de l'huile et le type de roulage du véhicule sont estimés respectivement par les estimateurs 62 et 36.

A partir de ces mesures et estimations, une phase 130 de supervision de la régénération du filtre 26, une phase 132 de supervision de la régénération du piège 24 et une phase 134 de supervision de la purge du piège 24 sont exécutées en parallèle. Ces différentes phases de supervisions consistent à envoyer au superviseur, lorsque cela est nécessaire, une requête de régénération ou une requête de purge.

La supervision de la régénération du piège 24 étant réalisée de façon conventionnelle, celle-ci ne sera pas décrite en détail..

De même, la phase 130 est réalisée de façon conventionnelle à l'exception du fait que la requête de régénération du filtre 26 est générée, lors d'une opération 140, en tenant compte du fait qu'une tâche de purge a été exécutée. En effet, comme indiqué précédemment, une tâche de purge provoque également la régénération du filtre 26 et doit donc être considérée par le superviseur 30 comme une tâche de régénération du filtre 26 afin d'émettre a bon escient la prochaine requête de régénération de ce filtre.

La phase 134 conduisant à l'envoi d'une requête de purge au superviser 50 va maintenant être décrite plus en détail.

Initialement, lors d'une étape 142, le générateur 52 acquiert les différentes estimations réalisées par les estimateurs 36, 60 et 62 ainsi que la température de fonctionnement mesurée par le capteur 44.

Ensuite, lors d'une étape 144, il acquiert également les valeurs des variables « tempo deSOx échoué » et « condition deSOx critique ».

A partir des différentes informations acquises lors des étapes 142 et 144, lors d'une étape 146, le générateur 52 établit le degré d'urgence affecté à la tâche de purge en appliquant les règles définies dans la base 66.

Ensuite, lors d'une étape 148, si la valeur du degré d'urgence établie est différente de « 0 », alors lors d'une étape 150, le générateur 52 génère une requête de purge dans laquelle il incorpore la valeur du degré d'urgence établi et envoie cette requête de purge au superviseur 50.

Dans le cas où le degré d'urgence établi est égal à « 0 », aucune requête de purge n'est envoyée vers le superviseur 50.

A chaque fois qu'une requête est envoyée par l'un des superviseurs, le superviseur 50 exécute une phase 160 de supervision de l'alimentation en carburant du moteur 4. Plus précisément, au début de cette phase 160, lors d'une étape 162, le superviseur 50 reçoit les requêtes transmises par les superviseurs 30, 32 et 46.

Ensuite, lors d'une étape 164, le module de décision commun 80 ordonnance et planifie les instants d'exécution des tâches de régénération et de purge déclenchées par la réception des requêtes. Lors de l'étape 164, le module 80 planifie l'exécution de ces tâches en appliquant les règles définies dans la base 92. Ensuite, lors d'une étape 166, les contrôleurs 82, 84 et 86 sont activés pour exécuter les tâches planifiées lors de l'étape 164.

Dans le cas où la tâche de purge doit être exécutée, avant de débuter l'exécution de celles-ci, lors d'une étape 168, le module de décision 80 en informe le superviseur 30 de façon à ce que cette information puisse être prise en compte lors de l'étape 140.

Si le contrôleur 82 est activé, alors celui-ci exécute, lors d'une phase 170, une tâche de régénération du filtre 26.

Si le contrôleur 86 est activé, alors celui-ci exécute, lors d'une phase 172, une tâche de régénération du piège 24.

Enfin, si le contrôleur 84 est activé, alors celui-ci exécute une phase 174 d'élimination des SOx stockés dans le piège 24.

Les phases 170 et 172 sont réalisées de façon conventionnelles et ne seront pas décrites ici plus en détail.

Lors de la phase 174, le dispositif 8 est commandé de manière à alimenter dans un premier temps le moteur 4 à l'aide d'un premier mélange pauvre permettant une élévation de la température à l'intérieure du piège 24 au dessus de 650°C et, dé préférence, au dessus de 700°C. Ensuite, le dispositif 8 est commandé pour alimenter le moteur avec un mélange riche permettant d'éliminer les SOx stockés dans le piège 24. Lors de cette alimentation avec un carburant riche, la température à l'intérieur du piège 24 diminue. Dès lors, ces phases d'alimentation en carburant riche sont alternées avec des phases d'alimentation en carburant pauvre de manière à maintenir la température à l'intérieur du piège 24 aux environs de 700° et par exemple dans une plage comprise entre 650° et 750°C.

Lorsque la phase 174 est déclenchée, le module 54 surveille le déroulement de cette phase pour demander en temps voulu l'arrêt de la tâche de purge du piège 24 en appliquant les règles de la base 68.

Plus précisément, lors d'une étape 180, au moment du déclenchement de l'exécution de la tâche de purge, le module 54 affecte à la variable « deSOx défavorable » la valeur faux.

Egalement au moment du déclenchement de la tâche de purge, lors d'une étape 182, le module 54 acquiert la masse $mSOx(t_0)$ de SOx stockés dans le piège 24 à cet instant là.

Ensuite, lors d'une étape 184, le module 54 acquiert la vitesse VdeSOx et la masse $mSOx(t)$ à l'instant courant.

Lors d'une étape 186, la vitesse VdeSOx est intégrée dans l'intervalle de temps écoulé depuis le début de l'exécution de la tâche de purge pour obtenir une masse $m_{st}(t)$ de SOx éliminée depuis le début de l'exécution de la tâche de purge.

Cette masse $m_{st}(t)$ est comparée, lors d'une étape 188 à la masse $mSOx(t_0)$ acquise lors de l'étape 182. Si celles-ci sont égales, cela signifie que la quasi-totalité du SOx a été éliminé du piège 24 et le module 54 commande, lors d'une étape 190, l'arrêt de la tâche de purge.

Ensuite, lors d'une étape 192, le module 54 réinitialise à zéro la valeur de la variable « compteur deSOx successivement échoués » et affecte la valeur faux à la variable « condition deSOx critique », lors d'une étape 194.

La phase 174 s'achève alors et le procédé retourne aux étapes 100 et 106.

Dans le cas où, lors de l'étape 188, il est établi qu'il reste encore une masse de SOx à éliminer du piège 24, le module 54 compare, lors d'une étape 200, la masse $m_{st}(t)$ à un seuil prédéterminé croissant en fonction du temps écoulé depuis le lancement de l'exécution de la tâche de purge. Ce seuil est représenté par une ligne croissante 202 dans le graphe de la figure 3. Dans ce graphe, une ligne 204 représente également un exemple d'évolution au cours du temps de la masse $m_{st}(t)$.

Dans le graphe de la figure 3, l'instant $t_0$ représente l'instant de début de l'exécution de la tâche de purge.

Si la masse $m_{st}(t)$ est inférieure au seuil prédéterminé, le module 54 vérifie, lors d'une étape 210, si l'exécution d'une tâche de régénération du filtre 26 a été requise mais non encore totalement exécutée. Dans l'exemple de la figure 3, on suppose qu'une tâche de régénération du filtre 26 a été requise à partir de l'instant 0 et ne s'achève qu'à l'instant $t_1$ comme représenté par la flèche 212.

Si aucune tâche de régénération du filtre 26 n'a été requise ou si celle-ci est totalement achevée, et que la masse $m_{st}(t)$ est inférieure au seuil prédéterminé, alors le module 54 affecte, lors d'une étape 216, la valeur vrai à la variable « deSOx défavorable » puis commande, lors d'une étape 218, l'arrêt de la tâche de purge. En effet, cela signifie que celle-ci s'exécute trop lentement pour être efficace. Dans ces conditions, il est plus judicieux d'interrompre la tâche de purge afin de la reprendre ultérieurement lorsque les conditions pour l'exécution de cette tâche de purge seront plus favorables. Cela permet donc de limiter l'usure du piège 24 puisque la durée des tâches de purge est raccourcie.

A l'issue de l'étape 218, le module 54 enclenche la minuterie 56, lors d'une étape 220. Cette minuterie 56 maintient la valeur de la variable « tempo deSOx inachevé » à la valeur vraie pendant un intervalle de temps prédéterminé après l'arrêt d'une tâche de purge inefficace. Ensuite, lors d'une étape 222, la valeur de la variable « compteur deSOx successivement échoué » est incrémentée d'un pas prédéterminé.

La valeur de ce compteur est ensuite comparée, lors d'une étape 224, à un seuil prédéterminé. Si ce seuil prédéterminé est dépassé, lors d'une étape 226, la valeur « vraie » est affectée à la variable « condition deSOx critique » puis le procédé retourne aux étapes 100 et 106. Dans le cas contraire, le procédé retourne directement aux étapes 100 et 106 sans modifier la valeur de la variable « condition deSOx critique ».

Si lors de l'étape 200, il est établit que la masse $m_{st}(t)$ est supérieure au seuil prédéterminé ou si, lors de l'étape 210, il est établit qu'une tâche de régénération est en cours d'exécution, le module 54 ne commande pas l'arrêt de la tâche de purge et retourne à l'étape 184.

Ainsi, comme illustré sur le graphe de la figure 3, entre les instants $t_2$ et $t_3$, la masse $m_{st}(t)$ est inférieure au seuil prédéterminé mais ceci ne déclenche pas l'arrêt de la tâche de purge car une tâche de régénération est actuellement en cours.

De nombreux autres modes de réalisation du système 34 sont possibles. Par exemple, la génération d'une requête de purge associée à un degré d'urgence ou la commande de l'arrêt de la tâche de purge telle que décrite ici, peuvent être mis en oeuvre dans un véhicule dont la ligne d'échappement ne comporte pas de filtre à particules mais, par exemple, uniquement un piège à NOx.

D'autres méthodes d'estimation du taux de dilution ou du niveau d'empoisonnement du piège 24 peuvent être utilisées que celles décrites ici. Il est en de même pour l'estimation du type de roulage. En particulier, certains de ces estimateurs sont remplacés, en variante, par des capteurs. A l'inverse, certains capteurs, comme par exemple, le capteur 44, sont, en variante, remplacés par des estimateurs.

Le système 34 a été décrit ici dans le cas particulier où un degré d'urgence est associé à la requête de purge afin d'ajouter un degré de flexibilité à la planification des tâches exécutées par le superviseur 50. En variante, un degré d'urgence de la tâche de régénération du filtre 26 est associé à la requête de régénération émise par le superviseur 30. Lorsqu'un degré d'urgence est affecté à la tâche de régénération du filtre 26, celui-ci peut être utilisé à la place du degré d'urgence affecté à la tâche de purge du piège 24 ou en plus de ce dernier degré d'urgence.

Le module de décision 80 peut être indépendant du superviseur d'alimentation.

## Revendications

1. Système d'élimination de SOx (Oxyde de Soufre) stockés dans un piège à NOx (Oxyde d'Azote) associé à un catalyseur d'oxydation et disposé dans une ligne d'échappement d'un moteur d'un véhicule automobile, ce système comportant :

   - un superviseur (50) d'alimentation apte à exécuter au moins une tâche de purge du piège à NOx, cette tâche consistant à commander un dispositif d'alimentation en carburant pour alimenter le moteur avec un mélange pauvre permettant d'élever et de maintenir la température du piège dans une plage rendant possible l'élimination de SOx et, en alternance, avec un mélange riche permettant d'éliminer les SOx stockés dans le piège à NOx,
   - un estimateur (60) propre à estimer la vitesse d'élimination des SOx stockés dans le piège à NOx lors de l'exécution de la tâche de purge, et
   - un module (54) d'arrêt de la tâche de purge,

   **caractérisé en ce que** le module d'arrêt (54) est apte à comparer la quantité de SOx éliminés obtenue en intégrant la vitesse estimée par l'estimateur en fonction du temps écoulé depuis le début de l'exécution de la tâche de purge, à un seuil minimal qui croît en fonction du temps écoulé depuis le début de l'exécution de la tâche de purge, et à commander l'arrêt de la tâche de purge en fonction du résultat de cette comparaison.

2. Système selon la revendication 1, pour un véhicule automobile comportant également un filtre à particules et un superviseur du filtre à particules propre à envoyer une requête de régénération du filtre à particules pour que le superviseur d'alimentation (50) exécute une tâche de régénération du filtre à particules, et dans lequel le module d'arrêt (54) est également apte à commander l'arrêt de la tâche de purge en fonction de la requête de régénération du filtre à particules envoyé par le superviseur du filtre à particules.

3. Système selon l'une quelconque des revendications précédentes, **caractérisé en ce que** le module d'arrêt (52) est également apte à commander immédiatement l'arrêt de la tâche de purge dès que la quantité estimée de SOx éliminés est supérieure à un seuil prédéterminé.

4. Module d'arrêt apte à être mis en oeuvre dans un système d'élimination de SOx conforme à l'une quelconque des revendications précédentes, **caractérisé en ce que** ce module d'arrêt est apte à commander l'arrêt de la tâche de purge en fonction de la vitesse estimée par l'estimateur.

5. Procédé d'élimination de SOx stockés dans un piège à NOx à l'aide d'un système d'élimination conforme à l'une quelconque des revendications 1 à 3, **caractérisé en ce que** le module d'arrêt commande (en 218) l'arrêt de la tâche de purge en fonction de la vitesse estimée par l'estimateur.

6. Support (96) d'enregistrement d'informations, **caractérisé en ce qu'**il comporte des instructions pour l'exécution d'un procédé d'élimination de SOx conforme à la revendication 5, lorsque ces instructions sont exécutées par un calculateur électronique.

## Claims

1. System for removing SOx (sulphur oxide) stored in a NOx (nitrogen oxide) trap associated with an oxidation catalyst and arranged in an exhaust line of a motor vehicle engine, this system comprising:

    - a supply controller (50) able to execute at least one purge task of the NOx trap, this task consisting in commanding a fuel supply device to supply the engine with a lean mixture allowing the temperature of the trap to be raised and maintained within a range that makes possible the removal of SOx and, in an alternating manner, with a rich mixture allowing the SOx stored in the NOx trap to be removed,
    - an estimator (60) suited to estimating the speed of removal of the SOx stored in the NOx trap on executing the purge task, and
    - a shut-off module (54) for the purge task,

    **characterized in that** the shut-off module (54) is able to compare the amount of removed SOx obtained by integrating the estimated speed by the estimator as a function of the time which has elapsed since the start of execution of the purge task, to a minimum threshold which increases as a function of the time which has elapsed since the start of the execution of the purge task, and to command the purge task to be shut off as a function of the result of this comparison.

2. System according to Claim 1, for a motor vehicle also comprising a particle filter and a controller of the particle filter suited to send a request to regenerate the particle filter so that the supply controller (50) executes a particle filter regeneration task, and in which the shut-off module (54) is also able to command the purge task to be shut off as a function of the particle filter regeneration request sent by the particle filter controller.

3. System according to any one of the preceding claims, **characterized in that** the shut-off module (52) is also able to command immediately the shut-off of the purge task as soon as the estimated amount of removed SOx is greater than a predetermined threshold.

4. Shut-off module able to be implemented in a SOx removal system according to any one of the preceding claims, **characterized in that** this shut-off module is able to command the shutting off of the purge task as a function of the speed estimated by the estimator.

5. Method for removing SOx stored in a NOx trap by means of a removal system according to any one of Claims 1 to 3, **characterized in that** the shut-off module commands (at 218) the shutting off of the purge task as a function of the speed estimated by the estimator.

6. Information recording medium (96), **characterized in that** it comprises instructions for the execution of a method for removing SOx according to Claim 5, when these instructions are executed by en electronic computer.

## Patentansprüche

1. System zur Eliminierung von SOx (Schwefeloxid), die in einer NOx-Falle (Stickstoff) gelagert sind, verbunden mit einem Oxidationskatalysator und in einer Auspuffanlage eines Motors eines Kraftfahrzeugs angeordnet, wobei dieses System Folgendes aufweist:

    - einen Versorgungs-Supervisor (50), der mindestens eine Reinigungsaufgabe der NOx-Falle ausführen kann, wobei diese Aufgabe darin besteht, eine Vorrichtung zum Versorgen mit Kraftstoff zu steuern, um den Motor mit einem armen Gemisch zu versorgen, das es erlaubt, die Temperatur der Falle auf einen Bereich zu erhöhen und diesen beizubehalten, der das Eliminieren von SOx ermöglicht, und, abwechselnd, mit einem reichhaltigen Gemisch, das es erlaubt, die SOx, die in der NOx-Falle gelagert sind, zu eliminieren,
    - eine Schätzungsvorrichtung (60), die die Eliminierungsgeschwindigkeit der SOx, die in der NOx-Falle gelagert sind, bei der Ausführung der Reinigungsaufgabe schätzen kann, und
    - ein Modul (54) zum Stoppen der Reinigungsaufgabe,

**dadurch gekennzeichnet, dass** das Stoppmodul (54) die Menge eliminierter SOx, die erzielt wird, indem die Geschwindigkeit integriert wird, die von der Schätzungsvorrichtung in Abhängigkeit von der seit dem Anfang der Ausführung der Reinigungsaufgabe verstrichenen Zeit geschätzt wird, mit einem Mindestschwellenwert vergleichen kann, der in Abhängigkeit von der Zeit zunimmt, die seit dem Anfang der Ausführung der Reinigungsaufgabe verstrichen ist, und das Stoppen der Reinigungsaufgabe in Abhängigkeit von dem Resultat dieses Vergleichs steuern kann.

2. System nach Anspruch 1, für ein Kraftfahrzeug, das auch ein Partikelfilter und einen Supervisor des Partikelfilters aufweist, der eine Regenerierungsanfrage des Partikelfilters senden kann, damit der Versorgungs-Supervisor (50) eine Regenerierungsaufgabe des Partikelfilters ausführt, und wobei das Stoppmodul (54) auch das Stoppen der Reinigungsaufgabe in Abhängigkeit von der Regenerierungsanfrage des Partikelfilters, die von dem Supervisor des Partikelfilters gesendet wird, steuern kann.

3. System nach einem der vorhergehenden Ansprüche, **dadurch gekennzeichnet, dass** das Stoppmodul (52) auch sofort das Stoppen der Reinigungsaufgabe steuern kann, sobald die geschätzte Menge an eliminierten SOx größer ist als ein vorbestimmter Schwellenwert.

4. Stoppmodul, das in einem System zum Eliminieren von SOx verwendet werden kann, nach einem der vorhergehenden Ansprüche, **dadurch gekennzeichnet, dass** dieses Stoppmodul das Stoppen der Reinigungsaufgabe in Abhängigkeit von der von der Schätzungsvorrichtung geschätzten Geschwindigkeit steuern kann.

5. Verfahren zum Eliminieren von SOx, die in einer NOx-Falle gelagert sind, mit Hilfe eines Eliminierungssystems nach einem der Ansprüche 1 bis 3, **dadurch gekennzeichnet, dass** das Stoppmodul (in 218) das Stoppen der Reinigungsaufgabe in Abhängigkeit von der von der Schätzungsvorrichtung geschätzten Geschwindigkeit steuert.

6. Träger (96) zum Aufzeichnen von Informationen, **dadurch gekennzeichnet, dass** er Anweisungen für die Ausführung eines Verfahrens zum Eliminieren von SOx nach Anspruch 5 ausführen kann, wenn diese Anweisungen von einem elektronischen Rechner ausgeführt werden.

Fig. 1

Fig. 2

Fig. 3

**EP 1 982 065 B1**

## RÉFÉRENCES CITÉES DANS LA DESCRIPTION

### Documents brevets cités dans la description

- EP 110065351 A
- EP 0859132 A
- FR 0407884